# FASCICULE DE BREVET EUROPEEN

(11) **EP 0 440 130 B1**
(45) Date de publication et mention de la délivrance du brevet: **08.03.1995**
(21) Numéro de dépôt: 91101060.1
(22) Date de dépôt: 28.01.1991
(51) Int. Cl.: C03B 37/012, C03B 29/02

(54) **Procédé de fabrication de préformes pour fibres optiques de caractéristiques régulières**
Verfahren zur Hestellung von Vorformen für optische Fasern mit gleichmässigen Eigenschaften
Process for producing preforms for optical fibres with regular characteristics

(30) Priorité: 02.02.1990 FR 9001237
(43) Date de publication de la demande: 07.08.1991
(73) Titulaire: ALCATEL FIBRES OPTIQUES, F-95871 Bezons Cedex (FR)
(72) Inventeur: Le Sergent, Christian, F-91460 Marcoussis (FR)
(74) Mandataire: Weinmiller, Jürgen

(56) Documents cités:
- WO-A-82/00635
- US-A- 3 811 857
- ELECTRONICS LETTERS. vol. 18, no. 17, août 1982, LONDON GB pages 721 - 722; E.MODONE ET AL: "LOW-LOSS FIBRES BY A PRESSURISED MCVD METHOD"
- PATENT ABSTRACTS OF JAPAN vol. 9, no. 78 (C-274)(1801) 06 avril 1985,& JP-A-59 213637 (SHOWA DENSEN DENRAN KK) 03 décembre 1984,
- PATENT ABSTRACTS OF JAPAN vol. 10, no. 136 (C-347)(2193) 20 mai 1986,& JP-A-60 260429 (HITACHI DENSEN KK) 23 décembre 1985,
- PATENT ABSTRACTS OF JAPAN vol. 10, no. 136 (C-347)(2193) 20 mai 1986,& JP-A-60 260439 (HITACHI DENSEN KK) 23 décembre 1985,
- AT & T TECHNICAL JOURNAL. vol.65, no. 1, février 1986, SHORT HILLS US pages 56 - 61; W.M. FLEGAL ET AL:"MAKING SINGLE-MODE PREFORMS BY THE MCVD PROCESS "

## Description

La présente invention concerne la fabrication des préformes dont sont tirées les fibres optiques actuellement utilisées.

Cette fabrication comporte typiquement les étapes suivantes :
- mise en place, sur un tour de verrier, d'un tube de départ allongé constitué de silice,
- balayage de l'espace interne de ce tube par un mélange gazeux,
- mise en rotation de ce tube,
- déplacement longitudinal d'un chalumeau chauffant des zones successives de la surface extérieure de ce tube pour réaliser un dépôt dans ces zones à partir dudit mélange gazeux, de manière à former sur la surface intérieure du tube une couche interne continue transparente présentant un indice de réfraction convenable, ceci au cours d'une ou plusieurs passes de chauffage effectuées par ce chalumeau,
- réalisation analogue d'autres couches internes présentant des indices de réfraction différenciés, ceci au cours d'autres passes de chauffage,
- et retreint de ce tube au cours de passes de chauffage à température plus élevée que précédemment, de manière à former une préforme cylindrique pleine.

On obtient ainsi, par des procédés connus sous les sigles MCVD, PCVD, etc..., des préformes dont des fibres optiques seront ultérieurement tirées par étirage à chaud.

On souhaite que les fibres optiques ainsi formées ne créent que de faibles pertes de la lumière qu'elles guident, notamment à l'endroit des connexions optiques qui seront réalisées avec ces fibres. Il faut pour cela que le coeur de la fibre soit bien centré par rapport à la surface extérieure de celle-ci et qu'il présente un diamètre bien constant. Dans un cas comme dans l'autre les tolérances sont de l'ordre de quelques centaines de nanomètres.

Ceci peut être obtenu à partir de préformes pleines satisfaisant à deux critères : un excentrement aussi petit que possible de leur coeur par rapport à leur surface extérieure, et un rapport constant entre le diamètre de ce coeur et celui de cette surface extérieure.

Les défauts pouvant actuellement être observées vis-à-vis de ces deux critères s'expliquent, dans le cas de préformes fabriquées par des procédés du genre précédemment indiqué, soit par des irrégularités présentes sur les tubes de départ ou concernant le dépôt des couches internes, soit par des déformations au cours des différentes étapes du procédé.

Des procédés de contrôle en cours de fabrication ont déjà été proposés.
L'article paru dans Electronic Letters vol. 18, n° 17, août 1982, pages 721-722, décrit un procédé de contrôle lors de la phase de dépôt MCVD dans le tube de départ de la préforme.
Les demandes de brevet japonais JP-A-59213637,
JP-A-60260429 et JP-A-60260439 décrivent des dispositifs de mesure du diamètre de la préforme pendant la phase de rétreint, ces dispositifs pilotant l'organe de chauffage de cette préforme.
Ces procédés connus ne permettent pas d'aboutir à des préformes exemptes de défauts, correspondant par exemple à des surépaisseurs de l'ordre de 150 »m à 500 »m, pour des préformes dont le diamètre peut aller de 20 mm à 60 mm. Ces défauts se trouvent typiquement le long des génératrices de la préforme sur une longueur pouvant aller de 5 à 100 cm.

La présente invention a notamment pour but de corriger de tels défauts .

Et, dans ce but, elle a notamment pour objet un procédé de fabrication de préformes pour fibres optiques de caractéristiques régulières, dans lequel une pièce de verre cylindrique subit des passes de chauffage sur un tour de verrier, caractérisé par le fait qu'on repère et mesure d'éventuels défauts optogéométriques de ladite pièce de verre, lorsqu'elle est sous la forme d'une préforme pleine en fin de fabrication, puis on corrige lesdits défauts par usinage de la surface extérieure de cette pièce au cours d'une passe finale de correction sur ledit tour de verrier.

De préférence, on repère et mesure lesdits défauts de ladite pièce de verre au cours d'une passe de mesure sur ledit tour de verrier, puis on corrige ces défauts par usinage thermique de la surface extérieure de cette pièce sans démontage de celle-ci, ceci au cours d'une dite passe de chauffage qui constitue alors ladite passe de correction. Il doit être compris que cette phase finale de correction peut être, soit une passe distincte de ladite passe de mesure et postérieure à celle-ci, soit être confondue en une même passe avec cette passe de mesure, les opérations de correction étant postérieures aux opérations de mesure au cours de cette passe.

La présente invention a aussi pour objet un dispositif pour la mise en oeuvre de ce procédé selon la revendication 5.

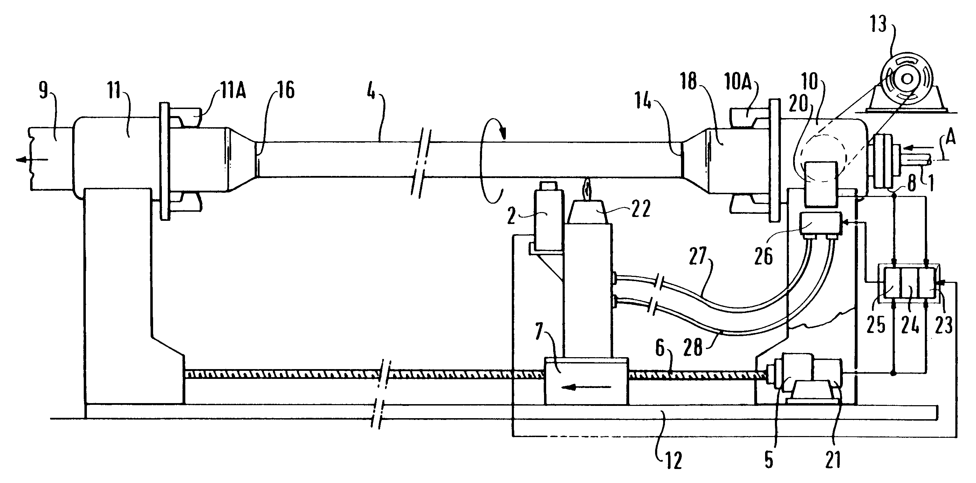

La présente invention sera mieux comprise grâce à la description, qui va être donnée ci-après avec l'aide de la figure ci-jointe.

Il doit être compris que les éléments décrits et représentés le sont à titre d'exemple non limitatif.

Cette figure représente une vue en élévation d'un banc de verrier pour la mise en oeuvre de la présente invention.

On va tout d'abord décrire le procédé de cette invention d'une manière relativement générale, divers éléments utilisés dans ce procédé étant désignés par des numéros de référence repris sur la figure.

Ce procédé comporte les opérations connues suivantes :
- mise en place de ladite pièce de verre 4 sur ledit tour de verrier 10, 11, 12, cette pièce présentant un axe A s'étendant selon sa longueur et une surface extérieure sensiblement cylindrique de révolution autour de cet axe,
- ce tour comportant des moyens de rotation 10, 11, 13 pour faire tourner cette pièce autour de cet axe, un chariot 7 apte à porter un organe de chauffage 22 pour chauffer une zone élémentaire de cette surface extérieure, et des moyens de déplacement 5, 6, 12 pour déplacer longitudinalement ce chariot,
- et des passes de chauffage au cours de chacune desquelles ledit tour donne une vitesse de rotation à ladite pièce de verre et déplace ledit organe de chauffage à une vitesse longitudinale sur la longueur de cette pièce, tandis que cet organe de chauffage chauffe cette pièce en présentant une puissance de chauffage, ces vitesses de rotation et longitudinale et cette puissance de chauffage constituant des paramètres de chauffage.

Selon la présente invention ce procédé comporte en outre une passe de mesure optogéométrique réalisée, après ladite opération de mise en place, à l'aide d'un ensemble de mesure qui comporte au moins un capteur de mesure 2 pour fournir un ensemble de signaux de mesure, les signaux de cet ensemble étant respectivement associés aux zones élémentaires d'un ensemble de telles zones couvrant ladite surface extérieure, et étant représentatifs d'éventuels défauts optiques et/ou géométriques présentés par ladite pièce de verre dans lesdites zones élémentaires qui leurs sont associées. De préférence au moins une dite passe de chauffage comporte des opérations de chauffage qui sont postérieures à la fourniture desdits signaux de mesure au cours de ladite passe de mesure optogéométrique et qui sont effectuées de manière à provoquer une évaporation superficielle de verre excédentaire de ladite pièce de verre. Cette passe de chauffage constitue alors une passe de correction. On comprendra cependant que l'usinage de la surface de la pièce de verre pourrait être réalisé autrement que par évaporation, par exemple par abrasion mécanique ou chimique. Au cours de ladite passe de correction un paramètre de correction, constitué de préférence par l'un au moins desdits paramètres de chauffage, est commandé à chaque instant en fonction de desdits signaux de mesure, de préférence en fonction de ceux qui sont associés à celle desdites zones élémentaires qui est chauffée à cet instant par ledit organe de chauffage, de manière à corriger lesdits défauts optiques et/ou géométriques présentés par ladite pièce de verre dans cette zone.

Un peu plus particulièrement, de préférence, ledit tour de verrier 10, 11, 12 fait tourner ladite pièce de verre 4 autour dudit axe longitudinal A au cours de ladite passe de mesure, ce tour comportant :
- un chariot 7 qui porte au moins un dit capteur de mesure 2 et qui déplace ce capteur longitudinalement sur la longueur de cette pièce au cours de cette passe de mesure, de manière que ce capteur de mesure passe en regard d'une succession de dites zones élémentaires de ladite surface extérieure et fournisse au moins une succession de signaux de mesure primaires associés à ces zones,
- un capteur de position de mesure angulaire 20 et un capteur de position de mesure longitudinale 21 pour fournir à chaque instant des coordonnées qui sont associées à la même dite zone élémentaire que lesdits signaux de mesure primaires fournis à cet instant et qui sont les coordonnées angulaire et longitudinale de cette zone,
- des moyens d'enregistrement primaires 23 pour enregistrer en association lesdits signaux de mesure primaires et lesdites coordonnées,
- des moyens de calcul 24 pour lire lesdits signaux de mesure primaires et lesdites coordonnées associées et pour fournir en réponse des signaux de mesure secondaires associés auxdites coordonnées et représentatifs d'une correction à apporter à ladite pièce de verre dans lesdites zones élémentaires associées,
- des moyens d'enregistrement secondaires 25 pour enregistrer en association lesdits signaux de mesure secondaires et lesdites coordonnées,
- un capteur de position de chauffage angulaire 20 et un capteur de position de chauffage longitudinale 21 pour fournir à chaque instant au cours de ladite passe de correction des coordonnées qui sont associées à ladite zone élémentaire chauffée par ledit organe de chauffage à cet instant et qui sont les coordonnées angulaire et longitudinale de cette zone,
- et des moyens de commande 25, 26 connectés auxdits capteur de position de chauffage 20, 21 pour recevoir lesdites coordonnées à chaque instant au cours de ladite opération de correction, ces moyens de commande étant en outre connectés auxdits moyens d'enregistrement secondaires 25 pour lire à chaque instant ceux desdits signaux de mesure secondaires qui sont associés auxdites coordonnées reçues à cet instant par ces moyens de commande, ces moyens de commande commandant à chaque instant ledit paramètre de correction en fonction de ceux desdits signaux de mesure secondaires qu'ils lisent à cet instant. Ces moyens de commande fournissent pour cela des signaux qui peuvent être constitués directement par lesdits signaux de mesure secondaires, ou qui peuvent être élaborés à partir de ces derniers.

Pour des raisons de simplicité un même chariot 7 porte ledit organe de chauffage 22 au cours de ladite passe de correction et ledit capteur de mesure 2 au cours de ladite passe de mesure, un même capteur 20 constitue lesdits capteurs de position de mesure angulaire et de position de chauffage angulaire, et un même autre capteur 21 constitue lesdits capteurs de position de mesure longitudinale et de position de chauffage longitudinale.

Lesdits moyens d'enregistrement primaires 23 et secondaires 25 et moyens de calcul 24 sont constituée par un calculateur numérique.

Le paramètre de correction est commandé au cours de ladite passe de correction de manière à chauffer suffisamment des zones à corriger, qui sont certaines desdites zones élémentaires, pour enlever par évaporation une partie extérieure du verre de ladite pièce de verre.

Plus particulièrement encore, dans un cas donné en exemple et représenté, ledit tour de verrier comporte deux poupées amont 10 et aval 11 qui sont entraînées par un moteur 13 et munies de mors amont et aval 10A et 11A pour maintenir et entraîner en rotation, autour d'un axe horizontal A, un tube de départ 4. Ce tube est constitué de silice et constitue ladite pièce de verre. Il est maintenu par ces mors par l'intermédiaire de manchons de raccordement en silice qui lui sont soudés à ses extrémités amont 14 et aval 16. Un joint tournant d'entrée 8 permet d'amener des mélanges gazeux réactifs à travers la poupée amont 10.

L'arrivée et la sortie des mélanges gazeux réactifs sont représentées par des flèches 1 et 9.

Le tour de verrier comporte aussi une table 12 muni d'un chariot 7 qui se déplace longitudinalement, c'est-à-dire parallèlement à l'axe A sous l'action d'une vis d'entraînement 6 qui est entraînée en rotation par un moteur 5 auquel le capteur de position longitudinale 21 est associé.

Une opération de dépôt d'une couche interne est par exemple réalisée en faisant arriver un mélange gazeux réactif convenable par l'intermédiaire du joint tournant 8, et en effectuant une passe de l'organe de chauffage 22. Cet organe est constitué par un chalumeau à oxygène et hydrogène fixé sur le chariot 7. Dans certains cas le mélange gazeux réactif peut avantageusement comporter des gouttelettes liquides en suspension et constituer ainsi un brouillard.

Plusieurs opérations de dépôts de couches de verres sont réalisées de manière analogue dans le cadre d'un procédé connu de dépôt "MCVD" utilisé pour fabriquer les préformes conventionnelles.

Pour la mise en oeuvre de la présente invention dans ce cadre, un capteur de position angulaire 20 est placé sur la poupée amont 10.

Les signaux fournis par les capteurs 20 et 21 sont transmis au calculateur 23, 24, 25 qui commande un ensemble de vannes 26, ce dernier commandant les débits d'oxygène et d'hydrogène qui arrivent par des tubes souples 27 et 28 au chalumeau 22.

Ce dernier est de préférence un chalumeau monobuse au cours de ladite passe de correction, et il doit alors avoir une constante de temps faible, de l'ordre de la seconde, en réponse aux signaux reçus du calculateur 23, 24, 25. On utilise au contraire de préférence un chalumeau à plusieurs buses lors d'une opération de dépôt de couche interne.

La figure correspond au cas où le paramètre de correction est unique et est constitué par la puissance de chauffage. Lesdits moyens de commande sont alors constitués par les moyens d'enregistrement secondaires 25 et l'ensemble de vannes 26. Mais un autre tel paramètre ou plusieurs tels paramètres combinés pourraient aussi être constitués par la vitesse de rotation et/ou la vitesse longitudinale, les moyens d'enregistrement 25 étant alors connectés en outre,ou seulement, aux moteurs 13 et/ou 5.

Par ailleurs l'organe de chauffage pourrait être constitué autrement que par un chalumeau, par exemple par un laser à gaz carbonique.

## Revendications

1. Procédé de fabrication de préformes pour fibres optique de caractéristiques régulières, dans lequel une pièce de verre (4) cylindrique subit des passes de chauffage sur un tour de verrier (10, 11, 12), caractérisé par le fait qu'on repère et mesure d'éventuels défauts optogéométriques de ladite pièce de verre, lorsqu'elle est sous la forme d'une préforme pleine en fin de fabrication, puis on corrige lesdits défauts par usinage de la surface extérieure de cette pièce au cours d'une passe finale de correction sur ledit tour de verrier.

2. Procédé selon la revendication 1, caractérisé par le fait qu'on repère et mesure lesdits défauts de ladite pièce de verre (4) au cours d'une passe de mesure sur ledit tour de verrier (10, 11, 12), puis on corrige ces défauts par usinage thermique de la surface extérieure de cette pièce sans démontage de celle-ci, ceci au cours d'une dite passe de chauffage qui constitue ladite passe finale de correction.

3. Procédé selon la revendication 2, ce procédé comportant les opérations suivantes :
- mise en place de ladite pièce de verre (4) sur ledit tour de verrier (10, 11, 12), cette pièce présentant un axe (A) s'étendant selon sa longueur et une surface extérieure sensiblement cylindrique de révolution autour de cet axe, ce tour comportant des moyens de rotation (10, 11, 13) pour faire tourner cette pièce autour de cet axe, un chariot (7) apte à porter un organe de chauffage (22) pour chauffer une zone élémentaire de cette surface extérieure, et des moyens de déplacement (5, 6, 12) pour déplacer longitudinalement ce chariot,
- et des passes de chauffage au cours de chacune desquelles ledit tour donne une vitesse de rotation à ladite pièce de verre et déplace ledit organe de chauffage à une vitesse longitudinale sur la longueur de cette pièce, tandis que cet organe de chauffage chauffe cette pièce en présentant une puissance de chauffage, ces vitesses de rotation et longitudinale et cette puissance de chauffage constituant des paramètres de chauffage,
- ce procédé étant caractérisé par le fait qu'il comporte en outre une passe de mesure optogéométrique réalisée à l'aide d'un ensemble de mesure qui comporte au moins un capteur de mesure (2) pour fournir un ensemble de signaux de mesure, les signaux de cet ensemble étant respectivement associés aux zones élémentaires d'un ensemble de telles zones couvrant ladite surface extérieure, et étant représentatifs d'éventuels défauts optiques et/ou géométriques présentés par ladite pièce de verre dans lesdites zones élémentaires qui leur sont associées,
- une dite passe de chauffage comportant des opérations de chauffage postérieures à la fourniture desdits signaux de mesure au cours de ladite passe de mesure optogéométrique et pour provoquer une évaporation superficielle de verre excédentaire de ladite pièce de verre de manière que cette passe de chauffage constitue une passe finale de correction,
- l'un au moins desdits paramètres de chauffage constituant un paramètre de correction, ce paramètre de correction étant commandé à chaque instant au cours de ladite passe finale de correction en fonction de ceux desdits signaux de mesure qui sont associés à celles desdites zones élémentaires qui est chauffée à cet instant par ledit organe de chauffage, de manière à corriger lesdits défauts optiques et/ou géométriques présentés par ladite pièce de verre dans cette zone.

4. Procédé selon la revendication 3, caractérisé par le fait que ledit paramètre de correction est commandé au cours de ladite passe de correction de manière à chauffer suffisamment des zones à corriger, qui sont certaines desdites zones élémentaires, pour enlever par évaporation une partie extérieure du verre de ladite pièce de verre (4).

5. Dispositif pour la mise en oeuvre du procédé selon l'une des revendications 3 et 4, caractérisé par le fait que ledit tour de verrier (10, 11, 12) faisant tourner ladite pièce de verre (4) autour dudit axe longitudinal (A), au cours de ladite passe de mesure, comporte :
- un chariot (7) qui porte au moins un dit capteur de mesure (2) et qui déplace ce capteur longitudinalement sur la longueur de cette pièce au cours de cette passe de mesure, de manière que ce capteur de mesure passe en regard d'une succession de dites zones élémentaires de ladite surface extérieure et fournisse au moins une succession de signaux de mesure primaires associés à ces zones,
- un capteur de position de mesure angulaire (20) et un capteur de position de mesure longitudinale (21) pour fournir à chaque instant des coordonnées qui sont associées à la même dite zone élémentaire que lesdits signaux de mesure primaires fournis à cet instant et qui sont les coordonnées angulaire et longitudinale de cette zone,
- des moyens d'enregistrement primaires (23) pour enregistrer en association lesdits signaux de mesure primaires et lesdites coordonnées,
- des moyens de calcul (24) pour lire lesdits signaux de mesure primaires et lesdites coordonnées associées et pour fournir en réponse des signaux de mesure secondaires associés auxdites coordonnées et représentatifs d'une correction à apporter à ladite pièce de verre dans lesdites zones élémentaires associées à ces signaux et à ces coordonnées,
- des moyens d'enregistrement secondaires (25) pour enregistrer en association lesdits signaux de mesure secondaires et lesdites coordonnées,
- un capteur de position de chauffage angulaire (20) et un capteur de position de chauffage longitudinale (21) pour fournir à chaque instant au cours de ladite passe de correction des coordonnées qui sont associées à ladite zone élémentaire chauffée par ledit organe de chauffage (22) à cet instant et qui sont les coordonnées angulaire et longitudinale de cette zone,
- et des moyens de commande (25, 26) connectés auxdits capteurs de position de chauffage (20, 21) pour recevoir lesdites coordonnées à chaque instant au cours de ladite opération de correction, ces moyens de commande étant en outre connectés auxdits moyens d'enregistrement secondaires (25) pour lire à chaque instant ceux desdits signaux de mesure secondaires qui sont associés auxdites coordonnées reçues à cet instant par ces moyens de commande, ces moyens de commande commandant à chaque instant ledit paramètre de correction en fonction de ceux desdits signaux de mesure secondaires qu'ils lisent à cet instant.

6. Dispositif selon la revendication 5, caractérisé en ce qu'un même chariot (7) porte ledit organe de chauffage (22) au cours de ladite passe de correction et ledit capteur de mesure (2) au cours de ladite passe de mesure, un même capteur constituant lesdits capteurs de position de mesure angulaire et de position de chauffage angulaire (20), un même capteur (21) constituant lesdits capteurs de position de mesure longitudinale et de position de chauffage longitudinale.

7. Dispositif selon la revendication 5, dans lequel ladite pièce de verre (4) étant constituée de silice, ledit organe de chauffage est constitué par un chalumeau (22) à oxygène et hydrogène.

8. Dispositif selon la revendication 5, dans lequel lesdits moyens d'enregistrement primaires (23) et secondaires (25) et lesdits moyens de calcul (24) sont constitués par un calculateur numérique.

## Claims

1. A method of manufacturing optical fiber preforms having regular characteristics, wherein a cylindrical piece of glass (4) is subjected to heating passes on a glassmaker's lathe (10, 11, 12), the method being characterized in that possible opto-geometrical defects of said piece of glass are detected and measured when the glass is in the form of a solid preform that has finished being fabricated, and then said defects are corrected by machining the outside surface of said piece during a final correction pass on said glassmaker's lathe.

2. A method according to claim 1, characterized by the fact that said defects of said piece of glass (4) are detected and measured during a measurement pass on said glassmaker's lathe (10, 11, 12), after which said defects are corrected by thermal machining of the outside surface of said piece without dismounting it, this taking place during one of said heating passes which constitutes said final correction pass.

3. A method according to claim 2, the method comprising the following operations:
installing said piece of glass (4) on said glassmaker's lathe (10, 11, 12), said piece of glass having an axis (A) extending lengthwise and having an outside surface which is substantially circularly cylindrical about said axis, said lathe including rotation means (10, 11, 13) for rotating said piece about said axis, a carriage (7) suitable for carrying a heater member (22) to heat an elementary area of said outside surface, and displacement means (5, 6, 12) for displacing said carriage longitudinally; and
heating passes during each of which said lathe imparts a speed of rotation to said piece of glass and displaces said heater member at a longitudinal speed along the length of said piece, while said heater member heats said piece by applying heating power thereto, said speed of rotation, said longitudinal speed, and said heating power constituting heating parameters;
said method being characterized by the fact that it also includes an opto-geometrical measurement pass performed by means of a measurement assembly which includes at least one measurement sensor (2) for providing a set of measurement signals, the signals from said assembly being associated with respective elementary areas in a set of such areas covering said outside surface, and being representative of possible optical and/or geometrical defects presented by said piece of glass in said elementary areas which are associated therewith;
one of said heating passes including heating operations subsequent to the provision of said measurement signals during said opto-geometrical measurement pass and serving to cause excess glass on the surface of said piece of glass to evaporate so that said heating pass constitutes a final correction pass;
at least one of said heating parameters constituting a correction parameter, said correction parameter being controlled at each instant during said final correction pass as a function of said measurement signals which are associated with that one of said elementary areas which is being heated at said instant by said heater member, in such a manner as to correct said optical and/or geometrical defects presented by said piece of glass in said area.

4. A method according to claim 3, characterized by the fact that said correction parameter is controlled during said correction pass in such a manner as to heat those of said elementary areas which constitute said areas to be corrected sufficiently, in order to remove by evaporation an outside portion of the glass of said piece of glass (4).

5. A device for implementing the method according to claim 3 or 4, characterized by the fact that said glassmaker's lathe (10, 11, 12), which causes said piece of glass (4) to rotate about said longitudinal axis (A) during said measurement pass, includes:
a carriage (7) carrying at least one of said measurement sensors (2) and dispatching said sensor longitudinally along the length of said piece of glass during said measurement pass, causing said measurement sensor to pass over a succession of said elementary areas of said outside surface and to provide a succession of primary measurement signals associated with said areas;
an angular measurement position sensor (20) and a longitudinal measurement position sensor (21) for providing coordinates which are associated at each instant with the same one of said elementary areas as said primary measurement signals being provided at said instant, and which constitute the angular and longitudinal coordinates of said area;
primary recording means (23) for recording said primary measurement signals in association with said coordinates;
calculation means (24) for reading said primary measurement signals and said associated coordinates and for providing in response thereto secondary measurement signals associated with said coordinates and representative of a correction to be applied to said piece of glass in said elementary areas associated with said signals and said coordinates;
secondary recording means (25) for recording said secondary measurement signals in association with said coordinates;
an angular heating position sensor (20) and a longitudinal heating position sensor (21) for providing coordinates at each instant during said correction pass, which coordinates are associated with said elementary area being heated by said heater member (22) at said instant, and comprising the angular and longitudinal coordinates of said area; and
control means (25, 26) connected to said heating position sensors (20, 21) to receive said coordinates at each instant during said correction operation, said control means also being connected to said secondary recording means (25) to read at each instant those of said secondary measurement signals which are associated with said coordinates received at said instant by said control means, said control means controlling said correction parameter at each instant as a function of those of said secondary measurement signals that it reads at said instant.

6. A method according to claim 5, characterized in that the same carriage (7) carries both said heater member (22) during said correction pass and said measurement sensor (2) during said measurement pass, a single sensor constitutes both said angular measurement position sensor and said angular heating position sensor (20), and a single sensor (21) constitutes both said longitudinal measurement position sensor and said longitudinal heating position sensor.

7. A device according to claim 5, in which said piece of glass (4) is made of silica and said heater member is constituted by an oxygen and hydrogen torch (22).

8. A device according to claim 5, in which said primary recording means (23), said secondary recording means (25), and said calculation means (24) are constituted by a digital computer.

## Patentansprüche

1. Verfahren zur Herstellung von Rohlingen für Lichtleitfasern mit regelmäßigen Eigenschaften, bei dem ein zylindrisches Glasteil (4) Heizdurchläufen auf einer Glaserdrehbank (10, 11, 12) unterzogen wird, dadurch gekennzeichnet, daß man eventuelle optogeometrische Fehler des Glasteils erfaßt und mißt, wenn es in Form eines massiven Rohlings am Ende der Herstellung vorliegt, und dann diese Fehler durch Bearbeitung der Außenoberfläche dieses Teils während eines letzten Korrekturdurchlaufs auf der Glaserdrehbank korrigiert.

2. Verfahren nach Anspruch 1, dadurch gekennzeichnet, daß diese Fehler des Glasteils (4) während eines Meßdurchlaufs auf der Glaserdrehbank (10, 11, 12) erfaßt und gemessen werden und dann durch Wärmebearbeitung der Außenoberfläche dieses Teils, ohne es auszubauen, korrigiert werden, und zwar während eines Heizdurchlaufs, der somit den Korrekturdurchlauf darstellt.

3. Verfahren nach Anspruch 2, wobei dieses Verfahren die folgende Operationen aufweist:
- Einspannen des Glasteils (4) auf der Glaserdrehbank (10, 11, 12), wobei dieses Teil eine Achse (A), die sich entlang seiner Länge erstreckt und eine im wesentlichen um diese Achse drehsymmetrische Oberfläche aufweist, wobei diese Drehbank Drehmittel (10, 11, 13), um das Teil um die Achse zu drehen, einen Wagen (7), der ein Heizorgan (22) tragen kann, um einen elementaren Bereich der Oberfläche des Teils zu erwärmen, und Verschiebemittel (5, 6, 12) aufweist, um den Wagen in Längsrichtung zu bewegen,
- und Heizdurchläufe, während denen die Drehbank dem Glasteil eine Drehgeschwindigkeit verleiht und das Heizorgan mit einer Längsgeschwindigkeit über die Länge dieses Teils bewegt wird, wobei dieses Heizorgan dieses Teil erwärmt, indem es eine Heizleistung aufbringt, wobei die Dreh- und die Längsgeschwindigkeit und die Heizleistung Heizparameter darstellen, dadurch gekennzeichnet, daß es außerdem einen Durchlauf zur optogeometrischen Messung aufweist, der nach der Operation des Einspannens mit Hilfe einer Meßeinheit erfolgt, die mindestens eine Meßsonde (2) enthält, um eine Gruppe von Meßsignalen zu liefern, wobei die Signale dieser Gruppe je den elementaren Bereichen einer Gruppe solcher Bereiche zugeordnet sind, die die Außenoberfläche bedecken und für eventuelle optische und/oder geometrische Fehler repräsentativ sind, die das Glasteil in diesen elementaren Bereichen aufweist, die ihnen zugeordnet sind,
- wobei mindestens einer der Heizdurchläufe nach der Lieferung der Meßsignale während des optogeometrischen Meßdurchlaufs derart durchgeführt wird, daß eine oberflächliche Verdampfung des überschüssigen Glases dieses Glasteils hergevorrufen wird, so daß dieser Heizdurchlauf einen letzten Korrekturdurchlauf bildet,
- wobei mindestens einer der Heizparameter einen Korrekturparameter bildet, der zu jedem Zeitpunkt in Abhängigkeit von den Meßsignalen gesteuert wird, die denen desjenigen elementaren Bereichs zugeordnet sind, der zu diesem Zeitpunkt vom Heizorgan erwärmt wird, um die optischen und/oder geometrischen Fehler zu korrigieren, die dieses Glasteil in diesem Bereich aufweist.

4. Verfahren nach Anspruch 3, dadurch gekennzeichnet, daß der Korrekturparameter während des Korrekturdurchlaufs derart gesteuert wird, daß die zu korrigierenden Bereiche ausreichend erwärmt werden, um durch Verdampfung einen äußeren Teil des Glases des Glasteils (4) zu entfernen.

5. Vorrichtung zur Anwendung des Verfahrens nach einem der Ansprüche 3 und 4, dadurch gekennzeichnet, daß die Glaserdrehbank (10, 11, 12), die das Glasteil (4) um die Längsachse (A) während des Meßdurchlaufs dreht, aufweist:
- einen Wagen (7), der mindestens eine Meßsonde (2) trägt und diese Sonde in Längsrichtung über die Länge des Teils während des Meßdurchlaufs verschiebt, so daß diese Meßsonde vor einer Folge der elementaren Bereiche der Oberfläche des Teils vorbeiläuft und mindestens eine Folge von diesen Bereichen zugeordneten primären Meßsignalen liefert,
- einen Winkelpositionsgeber (20) und einen Längspositionsgeber (21) für den Meßdurchlauf, um zu jedem Zeitpunkt Koordinaten zu liefern, die dem gleichen elementaren Bereich zugeordnet sind wie die zu diesem Zeitpunkt gelieferten primären Meßsignale und die die Winkel- und Längskoordinaten dieses Bereichs sind,
- erste Speichermittel (23), um die primären Meßsignale und die zugeordneten Koordinaten zu speichern,
- Rechenmittel (24), um die primären Meßsignale und die zugeordneten Koordinaten zu lesen und als Antwort sekundäre Meßsignale zu liefern, die den Koordinaten zugeordnet und repräsentativ für eine an diesem Glasteil in diesen zugeordneten elementaren Bereichen anzubringende Korrektur sind,
- zweite Speichermittel (25), um die sekundären Meßsignale und die zugeordneten Koordinaten zu speichern,
- einen Winkelpositionsgeber (20) für den Heizdurchlauf und einen Längspositionsgeber (21) für den Heizdurchlauf, um zu jedem Zeitpunkt während des Korrekturdurchlaufs Koordinaten zu liefern, die dem von dem Heizorgan (22) zu diesem Zeitpunkt erwärmten elementaren Bereich zugeordnet sind und die die Winkelkoordinate und die Längskoordinate dieses Bereichs sind,
- und Steuermittel (25, 26), die an diese Geber (20, 21) angeschlossen sind, um zu jedem Zeitpunkt während der Korrekturoperation diese Koordinaten zu empfangen, wobei diese Steuermittel außerdem mit dem zweiten Speichermitteln (25) verbunden sind, um zu jedem Zeitpunkt diejenigen sekundären Meßsignale zu lesen, die den zu diesem Zeitpunkt von diesen Steuermitteln empfangenen Koordinaten zugeordnet sind, wobei diese Steuermittel zu jedem Zeitpunkt diesen Korrekturparameter in Abhängigkeit von denen der sekundären Meßsignale steuern, die sie zu diesem Zeitpunkt lesen.

6. Vorrichtung nach Anspruch 5, dadurch gekennzeichnet, daß der gleiche Wagen (7) das Heizorgan (22) während des Korrekturdurchlaufs und die Meßsonde (2) während des Meßdurchlaufs trägt, wobei die gleichen Geber für die Winkelposition und die Längsposition (20, 21) während des Meßdurchlaufs und des Korrekturdurchlaufs verwendet werden.

7. Vorrichtung nach Anspruch 5, bei der das Glasteil (4) aus Siliziumoxid besteht und das Heizorgan ein Brenner (22) für Sauerstoff- und Wasserstoff ist.

8. Vorrichtung nach Anspruch 5, bei der die ersten (23) und zweiten Speichermittel (25) und die Rechenmittel (24) ein digitaler Rechner sind.
